# EUROPEAN PATENT SPECIFICATION

(11) **EP 3 746 605 B1**
(45) Date of publication and mention of the grant of the patent: **07.06.2023**
(21) Application number: 19710460.7
(22) Date of filing: 01.02.2019
(51) Int. Cl.: E03B 1/04

(54) **WATER RECYCLING SYSTEM**
RECYCLING-SYSTEM FÜR WASSER
SYSTÈME DE RECYCLAGE D'EAU

(30) Priority: 02.02.2018 GB 201801733
(43) Date of publication of application: 09.12.2020
(73) Proprietor: Cascade Water Products Ltd, Arbroath, Angus DD11 3LS (GB)
(72) Inventor: HOLDSWORTH, Peter William, Dundee, Angus DD5 3QW (GB)
(74) Representative: Williams, Paul Edwin
(86) International application number: PCT/GB2019/050287
(87) International publication number: WO 2019/150130

(56) References cited:
- EP-A2- 0 732 457
- WO-A2-2014/202975
- GB-A- 2 256 155
- US-A- 5 254 246

## Description

The present invention relates to a water recycling system, and in particular to a system for recycling greywater.

Greywater (also spelled graywater, grey water, gray water, and sometimes referred to as sullage) refers to wastewater generated in households and office buildings from streams without faecal contamination, i.e. all streams except for wastewater from toilets. Sources of greywater include, sinks, showers, baths, washing machines and dishwashers. Greywater contains fewer pathogens than domestic wastewater, and is generally safer and easier to handle, treat and reuse onsite, for example for toilet flushing, landscape or crop irrigation, and other non-potable uses.

Greywater reuse in urban water systems provides substantial benefits for both the water supply subsystem, by reducing the demand for fresh, clean water, as well as the wastewater subsystems, by reducing the amount of wastewater required to be conveyed and treated.

EP0732457A2 discloses a device for reusing grey water which comprises a first tank to receive used water and a second tank with a removal point for the cleaned water. A third tank is connected to the removal point of the second tank wherein the second and third tanks have a sludge outlet with a manually operated valve.

US5254246A discloses a water reclamation system which comprises an aerator/clarifier chamber, a sterilizer treatment tank, a pump to pump sterilized water, at least two filters serially connected to receive water from said pump, and means for backwashing said serial filters.

GB2256155A discloses a domestic water recycling system wherein water flows into a tank via an inlet through filter mesh and foam filters of different pore sizes. The tank has a peripheral weir over which excess water and soap bubbles flow to an outlet, loading to an underground tank, also equipped with filters and an overflow, together with a pump controlled by level sensors in both tanks, so that a minimum level is maintained in the tank.

WO2014/202975A2 discloses a water recycling device comprising a first reservoir for receiving and holding greywater to allow suspended solids in the greywater to settle at the bottom of the first reservoir; a greywater inlet pipe through which greywater enters the first reservoir at or towards the bottom of the first reservoir; a waste outlet in the first reservoir through which settled solids can be purged from the first reservoir; a second reservoir for receiving greywater from the first reservoir from which at least some suspended solids have been removed, and in which the greywater may be mixed with potable water; and a water outlet in the second reservoir through which water can be discharged from the second reservoir.

Complex, whole-building solutions and small-scale domestic systems are known, but there is a need for cheaper micro systems which can be retrofitted in commercial and domestic settings, to effectively reduce costs, energy and water usage.

The present invention seeks to provide a water recycling system which can meet this need, by providing a low cost, easy to fit water recycling system which can reduce commercial and household water consumption, for example by up to 30%.

Thus, according to the present invention, there is provided a water recycling system which comprises:
a first settlement tank, having an inlet and an outlet;
a second settlement tank having an inlet in fluid communication with the outlet of the first settlement tank, and an outlet;
at least one storage tank having an inlet in fluid communication with the outlet of the second settlement tank, and an outlet;
wherein at least one of the first and second settlement tanks comprises an inner tank and an outer tank around and in fluid communication with the inner tank, wherein the inlet opens into the inner tank, and the outlet opens from the outer tank
characterised in that the system further comprises an overflow sensor, for sensing water which is overflowing from the system and thus that the tanks of the system are full, wherein the system is arranged such that when the overflow sensor senses water flowing for a predetermined period of time then a partial or complete purge of one or more of the system tanks is triggered.

The system of the present invention thus comprises a sequence of tanks in fluid communication connected in series, i.e. in order: a first settlement tank, a second settlement tank, and at least one storage tank.

At least one of the first and second settlement tanks thus comprises an inner tank and an outer tank around and in fluid communication with the inner tank. Thus, the outer tank may take the form of a sleeve surrounding the inner tank wherein the inner and outer tanks are in fluid communication at the bottom of the tanks.

Preferably, both the first and second settlement tanks comprise an inner tank and outer tank, such that in use water can enter the settlement tank via the inlet into the inner tank and then into the outer tank, and can leave said settlement tank from the outer tank via the outlet. Thus, in preferred embodiments in which both the first and second settlement tanks comprise an inner and outer tank, the system inlet opens into the first settlement tank inner tank, the first settlement tank outlet opens from the first settlement tank outer tank into the second settlement tank inner tank via the second settlement tank inlet, the second settlement tank outlet opens from the second settlement tank outer tank into the at least one storage tank via the storage tank inlet. The storage tank can store water which has passed through the first and second settlement tanks until it is needed for use, for example to flush a toilet.

The use of inner and outer tanks in the settlement tanks allows the water in the settlement tanks time to settle out, for small solids to gravitate to the bottom, and for any soap residue to dissipate. In this way, water entering the at least one storage tank from the second settlement tank may have a significantly reduced soap and foam content.

In preferred embodiments, the first and/or second settlement tank inlets are positioned at the top of the tanks, such that water can fill the tanks under gravity, which allows more time for solids in the water to settle to the bottom of the settlement tanks.

Preferably, the outlets of the first and/or second settlement tanks are positioned such that water only passes through when the settlement tanks are substantially full of water. Thus, water preferably only passes through the outlet of the first settlement tank into the second settlement tank when the first settlement tank is substantially full, and preferably only passes through the outlet of the second settlement tank into the at least one storage tank when the second settlement tank is substantially full.

One or more of the first and second settlement tanks and the at least one storage tank may comprise a drainage outlet for allowing settled particles in the bottom of the tanks to be removed, to prevent build-up of said particles. The drainage outlets are conveniently positioned in the bottom of each tank, and may be opened and closed by a valve, such as a solenoid valve. The valves may be controlled by a control system, to open at predetermined intervals for a predetermined period of time. For example, the drainage valves may open for a period of a few seconds or longer, for example 10 seconds to a minute, such as 30 seconds, every few days or longer, for example every other day, every three days, or once a week. Preferably each tank in the system comprises a drainage outlet.

In preferred embodiments, the first and/or second settlement tanks comprise a filter for collecting solids. The filter is preferably positioned within the inner tank of the settlement tank, more preferably across the width of the inner tank adjacent where it communicates with the outer tank, so that water entering the system must pass through the filter before entering the next tank in the series. The filter may comprise a mesh of a suitable mesh size, typically100 to 500µm mesh, such as 200 to 400µm mesh. If both the first and second settlement tanks comprise a filter, then the filter for the first settlement tank should have a larger pore size than that for the second settlement tank. For example, in such embodiments, the filter for the first settlement tank may have a mesh size of 400um and the filter for the second settlement tank may have a mesh size of 250- 260um. Each filter may extend part-way or substantially fully along the length of the tank in which it is situated.

The first and/or second settlement tank filters may be cleaned through a purge of the settlement tanks, i.e. an emptying of water from the tanks. A purge of one or more of the settlement tanks may be triggered, for example, as a consequence of a lack of water entering the system, an overflow of water from the system, as a regular event occurring at predetermined times, or in response to a manual request, as is described herein. When a settlement tank is purged, water in the inner tank may thus pass through the filter and out through a drainage outlet to waste, following which water in the outer tank flows back through the filter into the inner tank, thus dislodging solids which have built up on the filter. In addition, the filters may be cleaned by pumping water through them from, for example, the storage tank, or a toilet flushing tank, either as a regular event occurring at predetermined times, or in response to a manual request.

The system of the present invention may comprise more than one storage tank, for example first and second storage tanks in fluid communication connected in series.

The system of the present invention preferably further comprises dosing means for dosing water passing through the inlet into the first settlement tank with a chemical agent, such as a cleansing or purifying agent, for example an antibacterial agent or biocide. In this way, greywater entering the system may be pre-treated to kill bacteria and remove other impurities.

Dosing with a chemical agent may be triggered by an inlet sensor, and the system of the present invention thus preferably further comprises an inlet sensor, to sense water entering the system. The inlet sensor is thus conveniently positioned upstream from the first settlement tank inlet.

The amount of chemical agent to be added to the water entering the system depends, in part, on the flow rate of water. For example, the operation of a shower may cause a relatively low flow rate of water, whereas discharging a bath may result in a relatively high flow rate of water. The inlet sensor may thus comprise a high flow rate sensor and a low flow rate sensor. For example, the system may comprise an inlet sensor assembly comprising a chamber through which water can flow prior to entering the first settlement tank, a high flow rate sensor and a low flow rate sensor. The chamber may have an inlet and an outlet having dimensions which allow water to pass through the chamber without pooling at relatively low flow rates, but which cause water to pool within the chamber at higher flow rates, i.e. the chamber starts to fill with water as the flow rate increases. In this way, a sensor positioned at or near the bottom of the chamber (a "low level" sensor) can sense water passing through the chamber at lower flow rates, and a sensor positioned higher up in the chamber (a "high level" sensor) can sense when the water within the chamber reaches a predetermined level, indicating a greater flow rate. The actual flow rate of water entering the chamber can be calculated from the dimensions of the chamber and the rate of increase of water within the chamber. The low level sensor may thus trigger an appropriate dose of chemical agent for a low flow rate of water, and the high level sensor may thus trigger an appropriate dose of chemical agent for a high f ow rate of water. For example, the low flow rate sensor might trigger a chemical agent dosing pump to operate for 2 seconds for every 30 seconds whilst flow is detected, whereas the high flow rate sensor might trigger the dosing pump for 5 seconds for every 30 seconds whilst flow is detected (these durations are only illustrative of different relative "high" and "low" values, and the actual duration of operation of a dosing pump to be used in practice will depend upon a number of factors, such as the chemical agent and actual flow rates of water in question).

The dose of agent to be released will depend upon the agent in question and the desired result, but will typically be from 1 to 20ppm, for example 10ppm, of greywater.

In addition, the low flow rate sensor may be used to trigger a purge of the system if no water at all is detected entering the system for a predetermined period of time, for example period of a few hours to a few days, e.g. 24-36 hours. The low flow rate sensor can thus be used to trigger partial or complete emptying of some or all the tanks in the system in the event that it detects no water for a predetermined period of time. The system may preferably also be purged manually, for example in the event of contamination of the system, or purged at regular intervals, such as for 30 seconds once a week. Preferably, a total system purge is followed by the at least one storage tank being filled with water from an alternative source, such as mains water, so it will contain sufficient water for a predetermined number of toilet flushes, as will now be described in more detail.

The system is preferably operated so as to always contain sufficient water to flush a toilet, preferably sufficient water for a plurality of flushes. Thus, the at least one storage tank preferably comprises one or more sensors to sense the water level in the storage tank. If the water level in the storage tank drops to a predetermined minimum level, then water held within the first and/or second settlement tanks may be transferred to top-up the water level in the at least one storage tank, for example by opening a valve in the settlement tank and allowing the water to flow into the at least one storage tank under gravity or by a pump. For example, the low water level sensor might trigger a valve to open and optionally a pump to operate to transfer water from the first and/or second settlement tank to the at least one storage tank for a predetermined period of time, or until the water level in the at least one storage tank increases to a predetermined level, for example as detected by a further sensor.

Additionally or alternatively, water in the at least one storage tank may be topped up with water from another water source, for example mains water. For example, if there is insufficient water in the first and/or settlement tank to top-up the water in the at least one storage tank, as described above, then a cold water inlet in the storage tank may be opened to allow water from an alternative source to top-up the water in the at least one storage tank, to ensure that there is always sufficient water held in the at least one storage tank to provide a predetermined number of toilet flushes. A toilet flush may use for example 5-6 litres of water, so, for example, sufficient top-up water for three toilet flushes would approximate to 15-20 litres of water. For example, the low water level sensor might trigger a valve to open and optionally a pump to operate to allow mains water to flow into the at least one storage tank for a predetermined period of time, or until the water level in the at least one storage tank increases to a predetermined level, for example as detected by a further sensor.

The at least one storage tank may contain a float valve (such as a ballcock) for triggering the opening of one or more valves to top-up water in the tank, for example from either the first and/or second settlement tank and/or an alternative water source, to ensure that a minimum volume of water is stored within the system at any given time.

The system of the present invention preferably comprises one storage tank, but may comprise more than one storage tank in fluid communication connected in series. For example, the system may comprise in order, an inlet into a first settlement tank, a second settlement tank, a first storage tank, a second settlement tank, and an outlet.

The system of the present invention further comprises an overflow sensor, for sensing water which is overflowing from the system and thus that the tanks of the system are full, i.e. the first and second settlement tanks and the at least one storage tank. The overflow sensor may thus be conveniently positioned at the top of the most downstream tank in the series, i.e. the single or final storage tank, for example in an overflow pipe. If the system is overflowing, then more water is entering the system than is leaving, which indicates that the water stored within the system may be old and require replacing to reduce bacterial growth. Thus, the system is set up so that when the overflow sensor senses water flowing for a predetermined period of time, for example 10 - 20 (e.g. 15) seconds, then a partial or complete purge of one or more of the system tanks is triggered, for example a partial (e.g. for a predetermined duration, e.g. 10 - 30 (e.g. 20) seconds), or complete purge of the first and second settlement tanks. This allows older water to be removed, to be replaced by water entering the system through the inlet.

The system of the present invention preferably comprises a control system for controlling operation of the system. The control system may be set up or programmed to perform certain actions at regular time intervals, such as a regular partial or complete purge of the settlement and/or storage tanks for the removal of settled solids; other actions in response to activation of a sensor, such as the inlet flow sensors, water level sensors, and overflow sensor described above; or actions in response to ad hoc manual requests, such as an emergency partial or complete purge of the system in the event of contamination, or system shutdown. The control system may employ any suitable hardware and software.

As described above, water stored in the at least one storage tank is suitable for any non-potable use, and is particularly suitable for use in flushing toilets. Thus, water held in the at least one storage tank may flow from the at least one storage tank into the flushing tank of a toilet. The water may flow to the toilet flushing tank either under gravity, or via a distribution pump. Flow under gravity has the advantage that water may continue to flow even in the event of power failure. In embodiments where the stored water is pumped to the end use, for example, the flushing tank of a toilet, the distribution pump may be controlled by a pressure switch, which runs the pump when the detected water pressure drops, for example due to a toilet being flushed, to pump more water from the at least one storage tank to the end use. Of course, the end use of the water recycled by the system may be other than toilet flushing, for example irrigation.

The various components of the system of the present invention may be made from any suitable components, such as pipes of suitable diameter and thickness, and tanks of suitable volumes. For example, the first and second settlement tanks may each have a volume of from 20 to 30 litres each, for example 25 or 28 litres. These volumes may conveniently be achieved through tanks having a diameter of approximately 200mm (or approximately 8 inches) The at least one storage tank may have a volume, for example, of 75 to 100 litres. For example, a storage tank having dimensions of 525 x 200 x 850mm will have a volume of approximately 89.25 litres. The low water level sensor described above in the at least one storage tank may be positioned, for example, so that it is triggered when the water level in the tank has decreased to, for example, 50% of the maximum volume of the tank. In those preferred embodiments in which the first and second settlement tanks comprise inner and outer tanks, the inner tank may have a diameter of approximately 150mm (or approximately 6 inches) and the outer tank may have a diameter of approximately 200mm (or approximately 8 inches). The tanks may preferably be internally coated to prevent fouling and bacterial growth, for example with a suitable metal, such as copper.

Thus, in use of preferred embodiments of the system of the present invention, greywater may flow from a bath or shower through the inlet sensor assembly. The greywater may have already passed through a suitable filter prior to arriving at the inlet sensor assembly. The inlet sensor assembly triggers dosing of the greywater with a suitable amount of chemical agent according to the flow rate of the water which is sensed. The dosed greywater flows into the first settlement tank via the first settlement tank inlet, into the first settlement tank inner tank, optionally through a filter in the inner tank, then the first settlement tank outer tank. As the first settlement tank continues to fill, water passes out of the outlet in the first settlement tank outer tank, and into the inner tank of the second settlement tank via the second settlement tank inlet, then into the second settlement tank outer tank, optionally through a filter in the inner tank. As the second settlement tank continues to fill, water passes out of the outlet in the second settlement tank outer tank, and into the at least one storage tank. If there is more than one storage tank, then as the first storage tank fills the water passes out of the first storage tank via the first storage tank outlet into the second storage tank, and from the second to the third, and so forth. One or more of the storage tanks in the series may be in fluid communication with the end use of the water, for example a toilet. A low level sensor in the at least one storage tank may sense when the water level decreases to a predetermined level, for example 50% of the storage tank volume, which may trigger the control system to release water from the first and/or second settlement tank to top-up the at least one storage tank. Additionally or alternatively, water from another source, such as mains water, may be used to top up the at least one storage tank, to ensure that water is always available for the end use. An overflow sensor may sense when the system is full, and trigger the control system to partially or completely purge "old" water from the system, to be replaced with "new" water, to reduce bacterial growth.

An embodiment of the water recycling system of the present invention, incorporating a water flow rate sensor assembly and a water overflow sensing system , will now be described in detail with reference to the accompanying drawings, in which:
Figure 1 is a schematic drawing of an embodiment of a water recycling system of the present invention; and
Figure 2 is a schematic drawing of an embodiment of a water distribution and pump arrangement, in fluid connection with the water recycling system shown in Figure 1.

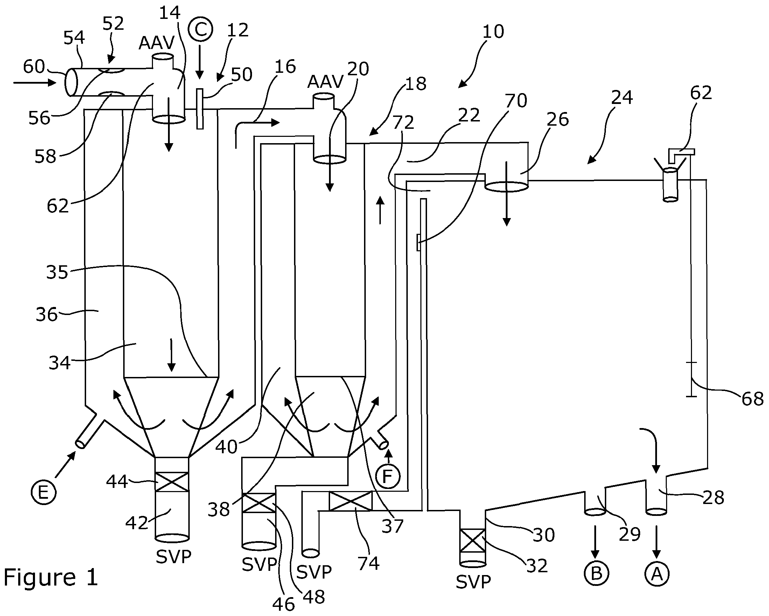

Thus, the water recycling system 10 shown in Figure 1 comprises a first settlement tank 12 having an inlet 14 and an outlet 16, a second settlement tank 18 having an inlet 20 and an outlet 22, and a storage tank 24 having an inlet 26 and outlets 28 and 29. The first 12 and second 18 settlement tanks and storage tank 24 are in fluid communication connected in sequence.

The first settlement tank 12 comprises an inner tank 34 and an outer tank 36, and the second settlement tank 18 also comprises an inner tank 38 and outer tank 40. The inlet 14 of the first settlement tank 12 is positioned at the top of and opens into the inner tank 34, and the outlet 20 of the first settlement tank 12 is positioned at the top of and opens from the outer tank 36. Similarly, the inlet 20 of the second settlement tank 18 is positioned at the top of and opens into the inner tank 38, and the outlet 22 of the second settlement tank 18 is positioned at the top of and opens from the outer tank 40. The first 12 and second 18 settlement tanks may be formed from any suitable material, and in a preferred embodiment the outer tank is formed from a 200mm diameter pipe and the inner tank from 150mm diameter pipe. The first 12 and second 18 settlement tanks are preferably internally coated with copper. The first 12 and second 18 settlement tanks may have the same or different capacities, which may suitably be from 20 to 30 litres. In a preferred embodiment, the second settlement tank 18 has a capacity of 28 litres, and the first settlement tank 12 a capacity of approximately 30 litres.

The first settlement tank 12 comprises a drainage outlet 42 for allowing settled particles at the bottom of the tank 12 to be removed, to prevent build-up of said particles The drainage outlet 42 is positioned at the bottom of the tank 12, and is opened and closed by a solenoid valve 44. The second settlement tank 18 is similarly arranged, with a drainage outlet 46 positioned at the bottom of the tank 18, which is opened and closed by a solenoid valve 48. The storage tank 24 is also similarly arranged, with a drainage outlet 30 positioned at the bottom of the tank 24, which is opened and closed by a solenoid valve 32. The valves 44, 48, 32 are controlled by a control system (not shown), to open at predetermined intervals for a predetermined period of time. For example, the drainage valves 44, 48, 32 may open for a period of a few seconds or longer, for example 10 seconds to a minute, such as 30 seconds, every few days or longer, for example every other day, every three days, or once a week. The drainage outlets 42, 46, 30 run off to a soil and vent pipe as indicated.

The first settlement tank 12 also comprises a filter 35 for collecting solids. The filter 35 is positioned within the inner tank 14 of the first settlement tank 12 adjacent where it communicates with the outer tank 36, so that water entering the system 10 must pass through the filter 35 before entering the outer tank 16 of the first settlement tank 12. The filter 35 may, for example, comprise a mesh of a suitable mesh size, for example, 100 to 500µm mesh, such as 400µm mesh.

The second settlement tank 18 also comprises a filter 37 for collecting solids. The filter 37 is positioned within the inner tank 38 of the first settlement tank 18 adjacent where it communicates with the outer tank 40, so that water entering the second settlement tank 18 must pass through the filter 37 before entering the storage tank 24. The filter 37 may, for example, comprise a mesh of a suitable mesh size, for example, 50 to 400µm mesh, e.g. 100 to 300 µm mesh, such as 260um mesh.

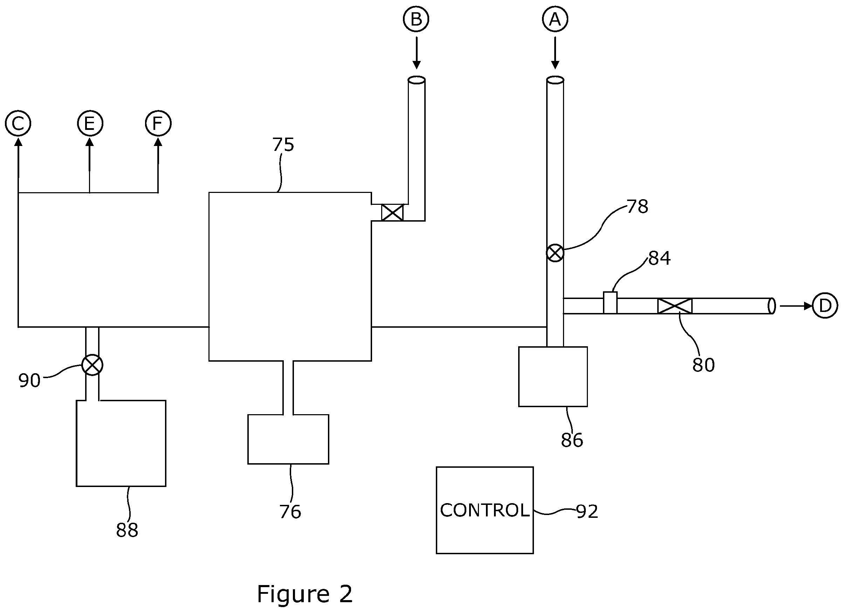

The filters 35 and 37 may be cleaned during a purge of the first settlement tank 12 and second settlement tank 18 respectively, as described herein. The filters 35 and 37 may also be cleaned with water pumped from either the storage tank 24 or a toilet flushing tank 75 (see Figure 2), as indicated by arrows E and F.

The water recycling system 10 further comprises dosing means 50 for dosing water passing through the inlet 14 into the first settlement tank 12 with a chemical agent, such as a cleansing or purifying agent, for example an antibacterial agent or biocide. The chemical agent is held with a reservoir (shown in Figure 2, indicated in Figures 1 and 2 by arrow C).

Dosing with the chemical agent is triggered by water flowing through inlet sensor assembly 52, which comprises a chamber 54 through which water flows prior to entering the first settlement tank 12, a high flow rate sensor 56 and a low flow rate sensor 58. The chamber 54 has an inlet 60 and an outlet 62 having dimensions which allow water to pass through the chamber 54 without pooling at relatively low flow rates, but which cause water to pool within the chamber 54 at higher flow rates, i.e. the chamber 54 starts to fill with water as the flow rate increases. In this way, the low flow rate sensor 58 can sense water passing through the chamber at lower flow rates, and the high flow rate sensor 56 can sense when the water within the chamber 54 reaches a predetermined level, indicating a greater flow rate. The actual flow rate of water entering the chamber 54 can be calculated from the dimensions of the chamber 54 and the rate of increase of water within the chamber. The low level sensor 58 may thus trigger an appropriate dose of chemical agent for a low flow rate of water, and the high level sensor 56 may thus trigger an appropriate dose of chemical agent for a high flow rate of water. For example, the low flow rate 58 sensor might trigger a chemical agent dosing pump (not shown) to operate for 2 seconds for every 30 seconds whilst flow is detected, whereas the high flow rate sensor 56 might trigger the dosing pump for 5 seconds for every 30 seconds whilst flow is detected (these durations are only illustrative of different relative "high" and "low" values, and the actual duration of operation of a dosing pump to be used in practice will depend upon a number of factors, such as the chemical agent and actual flow rates of water in question).

The dose of agent to be released will depend upon the agent in question and the desired result, but will typically be from 1 to 2Oppm, for example 10ppm, of greywater.

In addition, the low flow rate sensor 58 is used to trigger a purge of the water recycling system 10 if no water at all is detected entering the system 10 for a predetermined period of time, for example period of a few hours to a few days, e.g. 24-36 hours. The low flow rate sensor 58 can thus be used to trigger partial or complete emptying of some or all the tanks 12, 18, and/or 24 in the system 10 in the event that it detects no water for a predetermined period of time. The system 10 may also be purged manually, for example in the event of contamination of the system.

In the illustrated preferred embodiment, a total system 10 purge is followed by the storage tank 24 being filled with mains water from mains inlet 62, in order that it will contain sufficient water for a predetermined number of toilet flushes, as will now be described in more detail. Thus, the system 10 is operated so as to always contain sufficient water to flush a toilet, preferably sufficient water for a plurality of flushes.

As noted above, water in the storage tank 24 may be topped up with mains water via mains inlet 62. In this connection, the storage tank 24 contains a float valve 68 for triggering topping up of water from the mains via mains water inlet 62, to ensure that a minimum volume of water is stored within the system at any given time.

The illustrated water recycling system 10 further comprises an overflow sensor 70, for sensing water overflowing from the system 10 and that the first 12 and second 18 settlement tanks and the storage tank 24 are full. The overflow sensor 70 is positioned within overflow pipe 72 which opens from the top of the storage tank 24. If the system is overflowing, then more water is entering the system than is leaving, which indicates that the water stored within the system 10 may be old and require replacing to reduce bacterial growth. Thus, when the overflow sensor 70 senses water flowing for a predetermined period of time, for example 10 - 20 (e.g. 15) seconds, then a partial or complete purge of one or more of the system tanks 12, 18 and 24 is triggered, through the opening of drainage valves 44,48 and/or 32, and solenoid valve 74. The purge may be partial (e.g. for a predetermined duration, e.g. 10 - 30 (e.g. 20) seconds), or complete. This allows older water to be removed, to be replaced by water entering the system through the inlet.

The water recycling system 10 comprises a control system (not shown) for controlling operation of the system 10. The control system is programmed to perform certain actions at regular time intervals, such as a regular partial or complete purge of the first 12 and second 18 settlement tanks for the removal of settled solids; other actions in response to activation of a sensor, such as the inlet flow sensors 56 and 58, and overflow sensor 70 described above; or actions in response to ad hoc manual requests, such as an emergency partial or complete purge of the system 10 in the event of contamination, or system 10 shutdown. The control system employs suitable hardware and software.

For the illustrated embodiment, water stored in the storage tank 24 is used for flushing toilets. Thus, water held in the storage tank 24 flows via outlets 28 and 29 into the flushing tanks of toilets (see Figure 2), as indicated by the arrows "A" and "B", with reference to the water distribution and pump arrangement illustrated in Figure 2.

Thus, turning to Figure 2, water flows from the water recycling system 10 as indicated by arrow "B" to a toilet flushing tank 75 under gravity, for supplying a toilet 76. Water from the water recycling system 10 may also flow as indicated by arrow A to further toilet flushing tanks (not shown, indicated by arrow D) via a distribution pump 78 and non-return valve 80. The distribution pump 78 is activated by a pressure switch 84, which runs the distribution pump 78 when the detected water pressure drops, for example due to a toilet (not shown) being flushed, to pump more water from the water recycling system 10 to the end use.

At the point of switching on the water recycling system 10, the distribution pump 78 has a 2-minute time delay before switching on, which allows time for the mains water inlet 62 to fill so as not to airlock the distribution pump 78 or allow it to run dry. The distribution pump 78 runs and fills the toilet flushing tanks 75, arrow D, and when these tanks are all full and pressure starts to build this pressure is absorbed in to a small accumulator vessel 86 which prevents hunting of the distribution pump 78 motor.

Also shown in Figure 2 is a biocide reservoir 88, having a capacity of for example 10 litres, for dosing the water entering the first settlement tank 12 via dosing means 50 as indicated by arrow C, and for dosing the toilet flushing tank 75. The biocide may be pumped to the dosing means 50 and/or the toilet flushing tank 75 by a pump 90.

The water in the toilet flushing tank 75 may also be used to clean the filters 35 and 37 in the first settlement tank 12 and second settlement tank 18 respectively using distribution pump 90, either as a regular event occurring at predetermined times, or in response to a manual request.

The water recycling system 10 comprises a control system 92 for controlling operation of the system 10. The control system 92 is set up or programmed to perform certain actions at regular time intervals, such as a regular partial or complete purge of the settlement and/or storage tanks 12, 18, 24 for the removal of settled solids; other actions in response to activation of a sensor, such as the inlet flow sensors 56, 58, water level sensors 68, and overflow sensor 70 described above; or actions in response to ad hoc manual requests, such as an emergency partial or complete purge of the system in the event of contamination, or system shutdown. The control system 92 may employ any suitable hardware and software.

The various components of the water recycling system 10 may be made from any suitable components, such as pipes of suitable diameter and thickness, and tanks of suitable volumes. As noted above, the first 12 and second 18 settlement tanks may each have a capacity of from 20 to 30 litres, for example 25 or 28 litres. The storage tank 24 may have a volume, for example, of 75 to 100 litres. For example, a storage tank having dimensions of 525 x 200 x 850mm will have a volume of approximately 89.25 litres. A low water level sensor (not shown) may be positioned, for example, so that it is triggered when the water level in the storage tank 24 has decreased to, for example, 50% of its capacity.

Water flow through the water recycling system 10 and water distribution and pump arrangement is indicated in Figures 1 and 2 by the arrows. The greywater may have already passed through a suitable filter prior to arriving at the inlet sensor assembly 52. The inlet sensor assembly 52 triggers dosing of the greywater with a suitable amount of chemical agent according to the flow rate of the water which is sensed. The dosed greywater flows into the first settlement tank 12 via the first settlement tank inlet 14, into the first settlement tank inner tank 34, through the filter 35, then the first settlement tank outer tank 36. As the first settlement tank 12 continues to fill, water passes out of the outlet 16 in the first settlement tank outer tank 36, and into the inner tank 38 of the second settlement tank 18 via the second settlement tank inlet 20, then into the second settlement tank outer tank 40. As the second settlement tank 18 continues to fill, water passes out of the outlet 26 in the second settlement tank outer tank 40, and into the storage tank 24. Water in the storage tank 24 flows in the direction of arrow "A" to fill, in the illustrated embodiment, a toilet flushing tank 75 under gravity. Water from the water recycling system 10 may flow to further toilet flushing tanks 76 and 77 via a distribution pump 78 and non-return valves 80 and 82. The distribution pump 78 is activated by a pressure switch 84, which runs the distribution pump 78 when the detected water pressure drops, for example due to a toilet (not shown) being flushed, to pump more water from the water recycling system 10 to the end use.

It will be appreciated that the specific embodiments described herein are for illustrative purposes only, and that further modifications and variations of the embodiments are also possible without departing from the scope of the present invention as defined by the appended claims.

## Claims

1. A water recycling system (10) which comprises:
a first settlement tank (12), having an inlet (14) and an outlet (16); a second settlement tank (18) having an inlet (20) in fluid communication with the outlet (16) of the first settlement tank (12), and an outlet (22);
at least one storage tank (24) having an inlet (26) in fluid communication with the outlet (22) of the second settlement tank (18), and an outlet (28,29);
wherein at least one of the first and second settlement tanks (12,18) comprises an inner tank (34,38) and an outer tank (36,40) around and in fluid communication with the inner tank, wherein the inlet opens into the inner tank, and the outlet opens from the outer tank;
**characterised in that** the system (10) further comprises an overflow sensor (70), for sensing water which is overflowing from the system (10) and thus that the tanks (12, 18, 24) of the system (10) are full, wherein the system is arranged such that when the overflow sensor (70) senses water flowing for a predetermined period of time then a partial or complete purge of one or more of the system tanks (12, 18, 24) is triggered.

2. A water recycling system (10) according to claim 1 wherein the first and second settlement tanks (12,18) comprise an inner tank (34,38) and outer tank (36,40).

3. A water recycling system (10) according to claim 1 or 2 wherein the first and/or second settlement tank inlets (20,26) are positioned at the top of the tanks (12,18) and/or wherein the outlets (16,22) of the first and/or second settlement tanks (12,18) are positioned such that water only passes through when the settlement tanks (12,18) are substantially full of water.

4. A water recycling system (10) according to any preceding claim wherein one or more of the first and second settlement tanks (12,18) and the at least one storage tank (24) comprises a drainage outlet (42,46, 30) for allowing settled particles in the bottom of the tanks to be removed, wherein the one or more drainage outlets (42) are opened and closed by a valve (44,48,32) controlled by a control system, to open at predetermined intervals for a predetermined period of time.

5. A water recycling system (10) according to any preceding claim wherein the first and/or second settlement tanks (12,18) comprise a filter (35,37) for collecting solids wherein the or each filter (35,37) is positioned within the inner tank (34,38) of the settlement tank (12,18) across the width of the inner tank (34,38) adjacent where it communicates with the outer tank (36,40), and the or each filter (35,37) comprises a 100 to 500µm mesh.

6. A water recycling system (10) according to claim 5 wherein both the first and second settlement tanks (12,18) comprises a filter (35,37), and the filter (35) for the first settlement tank (12) has a larger pore size than the filter (37) for the second settlement tank (18), wherein the filter (35) for the first settlement tank (12) has a mesh size of 400um and the filter (37) for the second settlement tank (18) has a mesh size of 250-260pm.

7. A water recycling system (10) according to any preceding claim which further comprises dosing means (50) for dosing water passing through the inlet (14) into the first settlement tank (12) with a chemical agent.

8. A water recycling system (10) according to any preceding claim which further comprises an inlet sensor positioned upstream from the first settlement tank inlet (14) which sensor comprises an inlet sensor assembly comprising a chamber (54) through which water can flow prior to entering the first settlement tank (12), a high flow rate sensor (56) and a low flow rate sensor (58).

9. A water recycling system (10) according to any preceding claim wherein the at least one storage tank (24) comprises one or more sensors (68) to sense the water level in the storage tank (24), arranged such that if the water level in the storage tank (24) drops to a predetermined minimum level, then water held within the first and/or second settlement tanks (12,18) may be transferred to top-up the water level in the at least one storage tank (24), and/or the at least one storage tank (24) may be topped up with mains water.

10. A water recycling system (10) according to any preceding claim wherein the overflow sensor (70) is positioned at the top of the most downstream tank in the series.

11. A water recycling system (10) according to any preceding claim which comprises a control system (92) for controlling operation of the system (10) wherein the control system (92) is programmed to perform certain actions at regular time intervals, certain actions in response to activation of a sensor, and/or certain actions in response to ad hoc manual requests.

12. A water recycling system (10) according to any preceding claim in fluid communication with at least one toilet flushing tank (75).

13. A water recycling system (10) according to any preceding claim wherein the first and/or second settlement tanks (12,18), and/or the at least one storage tank (24) are internally coated with copper or a copper alloy or blend.

14. A water recycling system (10) according to any preceding claim wherein the first and/or second settlement tank (12,18) comprise a or the filter (35,37) and wherein the system (10) is arranged such that when the settlement tank (12,18) is purged, water in the inner tank (34,38) passes through the filter (35,37) and out through a drainage outlet to waste, following which water in the outer tank (36,38) flows back through the filter (35,37) into the inner tank to dislodge solids which have built up on the filter.

## Patentansprüche

1. Wasseraufbereitungssystem (10), das Folgendes umfasst:
Einen ersten Absetzbehälter (12) mit einem Einlass (14) und einem Auslass (16); einen zweiten Absetzbehälter (18) mit einem Einlass (20) in Fluidverbindung mit dem Auslass (16) des ersten Absetzbehälters (12), und einen Auslass (22);
mindestens einen Speicherbehälter (24) mit einem Einlass (26) in Fluidverbindung mit dem Auslass (22) des zweiten Absetzbehälters (18), und einen Auslass (28, 29);
wobei mindestens entweder der erste oder der zweite Absetzbehälter (12, 18) einen Innenbehälter (34, 38) und einen Außenbehälter (36, 40) darum herum und in Fluidverbindung mit dem Innenbehälter umfasst, wobei sich der Einlass zum Innenbehälter öffnet und sich der Auslass vom Außenbehälter öffnet;
**dadurch gekennzeichnet, dass** das System (10) ferner einen Überlaufsensor (70) umfasst, um Wasser zu erfassen, das aus dem System (10) überläuft und zu erfassen, dass die Behälter (12, 18, 24) des Systems (10) voll sind, wobei das System so angeordnet ist, dass, wenn der Überlaufsensor (70) Wasser erfasst, das für eine vorbestimmte Zeit überläuft, eine teilweise oder vollständige Entleerung eines oder mehrerer Systembehälter (12, 18, 24) ausgelöst wird.

2. Wasseraufbereitungssystem (10) nach Anspruch 1, wobei der erste und zweite Absetzbehälter (12, 18) einen Innenbehälter (34, 38) und einen Außenbehälter (36, 40) umfassen.

3. Wasseraufbereitungssystem (10) nach Anspruch 1 oder 2, wobei der erste und/oder zweite Absetzbehälter-Einlass (20, 26) an der Oberseite der Behälter (12, 18) positioniert ist und/oder wobei die Auslässe (16, 22) des ersten und/oder zweiten Absetzbehälters (12, 18) so positioniert sind, dass das Wasser nur hindurchfließen kann, wenn die Absetzbehälter (12,18) im Wesentlichen mit Wasser aufgefüllt sind.

4. Wasseraufbereitungssystem (10) nach einem der vorhergehenden Ansprüche, wobei einer oder mehrere der ersten und zweiten Absetzbehälter (12,18) und der mindestens eine Speicherbehälter (24) einen Drainageauslass (42,46, 30) umfassen, damit die abgesetzten Partikel am Boden der Behälter abgeführt werden können, wobei der eine oder die mehreren Drainageauslässe (42) über ein Ventil (44,48,32) geöffnet und geschlossen werden, das von einem Steuersystem geregelt wird, um sie in vorbestimmten Intervallen für eine vorbestimmte Zeit zu öffnen.

5. Wasseraufbereitungssystem (10) nach einem der vorhergehenden Ansprüche, wobei der erste und/oder zweite Absetzbehälter (12, 18) einen Filter (35,37) für das Auffangen der Feststoffe umfasst, wobei der oder jeder Filter (35, 37) im Innenbehälter (34, 38) des Absetzbehälters (12, 18) über die Breite des anliegenden Innenbehälters (34, 38) positioniert ist, wo er mit dem Außenbehälter (36,40) verbunden ist, und wobei der oder jeder Filter (35, 37) 100 bis 500 pm Maschenweite umfasst.

6. Wasseraufbereitungssystem (10) nach Anspruch 5, wobei sowohl der erste als auch der zweite Absetzbehälter (12, 18) einen Filter (35, 37) umfasst, und der Filter (35) für den ersten Absetzbehälter (12) eine größere Porenweite hat als der Filter (37) für den zweiten Absetzbehälter (18), wobei der Filter (35) für den ersten Absetzbehälter (12) eine Maschenweite von 400 pm und der Filter (37) für den zweiten Absetzbehälter (18) eine Maschenweite von 250 - 260 µm aufweist.

7. Wasseraufbereitungssystem (10) nach einem der vorhergehenden Ansprüche, das ferner eine Dosierungsvorrichtung (50) umfasst, um das durch den Einlass (14) in den ersten Absetzbehälter (12) fließende Wasser mit einem chemischen Wirkstoff zu mischen.

8. Wasseraufbereitungssystem (10) nach einem der vorhergehenden Ansprüche, das ferner einen Einlasssensor umfasst, der dem ersten Absetzbehälter-Einlass (14) vorgeschaltet ist, der Sensor umfasst eine Einlasssensor-Baugruppe, die eine Kammer (54), durch die Wasser fließen kann, bevor es in den ersten Absetzbehälter (12) eintritt, einen Durchflusssensor für hohen Durchfluss (56) und einen Durchflusssensor für niedrigen Durchfluss (58) aufweist.

9. Wasseraufbereitungssystem (10) nach einem der vorhergehenden Ansprüche, wobei der mindestens eine Speicherbehälter (24) einen oder mehrere Sensoren (68) umfasst, um den Wasserfüllstand im Speicherbehälter (24) zu messen, und der so angeordnet ist, dass, wenn der Wasserfüllstand im Speicherbehälter (24) auf einen vorbestimmten Mindestfüllstand fällt, das im ersten und/oder zweiten Absetzbehälter (12, 18) zurückgehaltene Wasser weitergeleitet werden kann, um den Wasserfüllstand in dem mindestens einen Speicherbehälter (24) auszugleichen, und/oder der mindestens eine Speicherbehälter (24) kann mit Leitungswasser ausgeglichen werden.

10. Wasseraufbereitungssystem (10) nach einem der vorhergehenden Ansprüche, wobei der Überlaufsensor (70) an der Oberseite des in der Reihe am weitesten nachgeschalteten Behälters positioniert ist.

11. Wasseraufbereitungssystem (10) nach einem der vorhergehenden Ansprüche, das ein Steuersystem (92) für die Regelung des Systembetriebs (10) umfasst, wobei das Steuersystem (92) programmiert ist, bestimmte Aktionen in regelmäßigen Zeitintervallen, bestimmte Aktionen als Reaktion auf die Aktivierung eines Sensors und/oder bestimmte Aktionen als Reaktion auf manuelle Ad hoc-Anforderungen auszuführen.

12. Wasseraufbereitungssystem (10) nach einem der vorhergehenden Ansprüche in Fluidverbindung mit mindestens einem Toiletten-Spülkasten (75).

13. Wasseraufbereitungssystem (10) nach einem der vorhergehenden Ansprüche, wobei der erste und/oder zweite Absetzbehälter (12, 18), und/oder der mindestens eine Speicherbehälter (24) im Inneren mit Kupfer oder einer Kupferlegierung oder einer Kupfermischung beschichtet ist.

14. Wasseraufbereitungssystem (10) nach einem der vorhergehenden Ansprüche, wobei der erste und/oder der zweite Absetzbehälter (12, 18) einen oder den Filter (35, 37) umfasst und wobei das System (10) so angeordnet ist, dass, wenn der Absetzbehälter (12, 18) entleert wird, Wasser im Innenbehälter (34, 38) durch den Filter (35, 37) strömt und dann durch einen Drainageauslass als Abwasser herausfließt, wobei in der Folge Wasser im Außenbehälter (36, 38) durch den Filter (35, 37) in den Innenbehälter zurückfließt, um Feststoffe, die sich im Filter angesammelt haben, zu lösen.

## Revendications

1. Système de recyclage d'eau (10) qui comprend :
un premier réservoir de décantation (12), présentant une entrée (14) et une sortie (16) ;
un second réservoir de décantation (18) présentant une entrée (20) en communication fluidique avec la sortie (16) du premier réservoir de décantation (12) et une sortie (22) ;
au moins un réservoir de stockage (24) présentant une entrée (26) en communication fluidique avec la sortie (22) du second réservoir de décantation (18) et une sortie (28, 29) ;
dans lequel au moins un parmi les premier et second réservoirs de décantation (12, 18) comprend un réservoir interne (34, 38) et un réservoir externe (36, 40) autour du réservoir interne et en communication fluidique avec celui-ci, dans lequel l'entrée s'ouvre dans le réservoir interne et la sortie s'ouvre à partir du réservoir externe ;
**caractérisé en ce que** le système (10) comprend en outre un capteur de débordement (70), destiné à détecter l'eau qui déborde du système (10) et que par conséquent les réservoirs (12, 18, 24) du système (10) sont pleins, dans lequel le système est agencé de sorte que lorsque le capteur de débordement (70) détecte l'écoulement d'eau pendant une période prédéfinie, alors une purge partielle ou complète d'un ou plusieurs parmi les réservoirs du système (12, 18, 24) est déclenchée.

2. Système de recyclage d'eau (10) selon la revendication 1, dans lequel les premier et second réservoirs de décantation (12, 18) comprennent un réservoir interne (34, 38) et un réservoir externe (36, 40).

3. Système de recyclage d'eau (10) selon la revendication 1 ou la revendication 2, dans lequel les entrées (20, 26) du premier et/ou du second réservoir de décantation sont positionnées au sommet des réservoirs (12, 18) et/ou dans lequel les sorties (16, 22) du premier et/ou du second réservoir de décantation (12, 18) sont positionnées de sorte que l'eau ne passe à travers que lorsque les réservoirs de décantation (12, 18) sont pratiquement pleins d'eau.

4. Système de recyclage d'eau (10) selon l'une quelconque des revendications précédentes, dans lequel un ou plusieurs parmi les premier et second réservoirs de décantation (12, 18) et ledit au moins un réservoir de stockage (24) comprennent une sortie de drainage (42, 46, 30) destinée à permettre aux particules décantées dans le fond des réservoirs d'être retirées, dans lequel le ou les sorties de drainage (42) sont ouvertes et fermées par une vanne (44, 48, 32) commandée par un système de commande, pour s'ouvrir à des intervalles prédéfinis pendant une période prédéfinie.

5. Système de recyclage d'eau (10) selon l'une quelconque des revendications précédentes, dans lequel les premier et/ou second réservoirs de décantation (12, 18) comprennent un filtre (35, 37) destiné à collecter les solides, dans lequel le ou chaque filtre (35, 37) est positionné à l'intérieur du réservoir interne (34, 38) du réservoir de décantation (12, 18) sur toute la largeur du réservoir interne (34, 38) adjacent à l'endroit où il communique avec le réservoir externe (36, 40), et le ou chaque filtre (35, 37) comprend une maille de 100 à 500 µm.

6. Système de recyclage d'eau (10) selon la revendication 5, dans lequel à la fois les premier et second réservoirs de décantation (12, 18) comprennent un filtre (35, 37) et le filtre (35) destiné au premier réservoir de décantation (12) présente une taille de pore plus grande que le filtre (37) destiné au second réservoir de décantation (18), dans lequel le filtre (35) destiné au premier réservoir de décantation (12) présente une taille de maille de 400 µm et le filtre (37) destiné au second réservoir de décantation (18) présente une taille de maille de 250 à 260 µm.

7. Système de recyclage d'eau (10) selon l'une quelconque des revendications précédentes, qui comprend en outre un moyen de dosage (50) destiné à doser l'eau passant par l'entrée (14) dans le premier réservoir de décantation (12) avec un agent chimique.

8. Système de recyclage d'eau (10) selon l'une quelconque des revendications précédentes qui comprend en outre un capteur d'entrée positionné en amont de l'entrée à partir du premier réservoir de décantation (14), lequel capteur comprend un ensemble de capteurs d'entrée comprenant une chambre (54) à travers laquelle l'eau peut s'écouler avant d'entrer dans le premier réservoir de décantation (12), un capteur de débit élevé (56) et un capteur de débit faible (58).

9. Système de recyclage d'eau (10) selon l'une quelconque des revendications précédentes, dans lequel ledit au moins un réservoir de stockage (24) comprend un ou plusieurs capteurs (68) pour détecter le niveau d'eau dans le réservoir de stockage (24), agencés de sorte que si le niveau d'eau dans le réservoir de stockage (24) chute à un niveau minimum prédéfini, alors l'eau contenue à l'intérieur des premier et/ou second réservoirs de décantation (12, 18) peut être transférée pour compléter le niveau d'eau dans ledit au moins un réservoir de stockage (24) et/ou ledit au moins un réservoir de stockage (24) peut être complété par de l'eau du réseau.

10. Système de recyclage d'eau (10) selon l'une quelconque des revendications précédentes, dans lequel le capteur de débordement (70) est positionné au sommet du réservoir le plus en aval dans la série.

11. Système de recyclage d'eau (10) selon l'une quelconque des revendications précédentes, qui comprend un système de commande (92) destiné à commander le fonctionnement du système (10), dans lequel le système de commande (92) est programmé pour effectuer certaines actions à des intervalles de temps réguliers, certaines actions en réponse à l'activation d'un capteur et/ou certaines actions en réponse à des demandes manuelles ad hoc.

12. Système de recyclage d'eau (10) selon l'une quelconque des revendications précédentes en communication fluidique avec au moins un réservoir de chasse d'eau des toilettes (75).

13. Système de recyclage d'eau (10) selon l'une quelconque des revendications précédentes, dans lequel les premier et/ou second réservoirs de décantation (12, 18), et/ou ledit au moins un réservoir de stockage (24) sont revêtus intérieurement de cuivre ou d'un alliage de cuivre ou d'un mélange.

14. Système de recyclage d'eau (10) selon l'une quelconque des revendications précédentes, dans lequel le premier et/ou le second réservoir de décantation (12, 18) comprennent un ou le filtre (35, 37) et dans lequel le système (10) est agencé de sorte que lorsque le réservoir de décantation (12, 18) est purgé, l'eau dans le réservoir interne (34, 38) passe à travers le filtre (35, 37) et sort par une sortie de drainage vers les eaux usées, après quoi l'eau dans le réservoir externe (36, 38) s'écoule de retour à travers le filtre (35, 37) dans le réservoir interne pour déloger les solides qui se sont accumulés sur le filtre.
